# EUROPÄISCHE PATENTANMELDUNG

(11) **EP 0 807 377 A2**
(43) Veröffentlichungstag der Anmeldung: **19.11.1997**
(21) Anmeldenummer: 97107538.7
(22) Anmeldetag: 07.05.1997
(51) Int. Cl.: A01D 75/30

(54) **Vorrichtung zum Anschliessen eines aus der Arbeitsstellung in eine Transportstellung höhenverstellbares Gerätes an ein Fahrzeug**

(30) Priorität: 13.05.1996 US 645367
(71) Anmelder: DEERE & COMPANY, Moline Illinois 61265-8098 (US)
(72) Erfinder: Goman, Gerald Eugene, Horicon, Wisconsin 53032 (US); Jerke, Marlyn Lee, Cedar Falls, Iowa 50613 (US)
(74) Vertreter: Feldmann, Bernhard

(57) **Zusammenfassung**

Bei einer Vorrichtung zum Anschließen eines aus einer Arbeitsstellung in eine Transportstellung höhenverstellbaren und als Mähwerk ausgebildeten Gerätes an ein Fahrzeug mit einem an das Gerät angeschlossenen Auslegerarm (24) und mit einer Hubvorrichtung ist der Auslegerarm (24) mit einem ersten Teil (30) verbunden und ein zweiter Teil (40) ist über einen ersten Schwenkmechanismus (32) an dem ersten Teil (30) angelenkt und der zweite Teil (40) ist über einen zweiten und höher als der erste Schwenkmechanismus (32) angeordneten Schwenkmechanismus (46) an dem Fahrzeug angelenkt, wobei der erste Teil (30) zusammen mit dem Auslegerarm (24) bei unbetätigter Hubvorrichtung und in der Arbeitsstellung des Gerätes um den ersten Schwenkmechanismus (32) aufund abbewegbar ist und bei betätigter Hubvorrichtung zum Verstellen des Gerätes aus der Arbeitsstellung in die Transportstellung um den ersten Schwenkmechanismus (32) gegen den zweiten Teil (40) schwenkbar ist und nachfolgend zusammen mit dem zweiten Teil (40) um den zweiten Schwenkmechanismus (46) hochklappbar ist.

## Beschreibung

Die Erfindung bezieht sich auf eine Vorrichtung zum Anschließen eines aus einer Arbeitsstellung in eine Transportstellung höhenverstellbaren Gerätes an ein Fahrzeug mit einem an das Gerät angeschlossenen Auslegerarm und mit einer Hubvorrichtung.

Diese bekannte Vorrichtung (US-A-4 854 112) findet sich an einem Großflächen-Sichelmäher in Form eines Sitzrasenmähers mit einer vorderen und je einer seitlich vorgesehenen Schneideinheit. Die erzielbaren Arbeitsbreiten können bis zu fünf Meter betragen, und die Vorrichtung zum Anschließen des Gerätes bezieht sich auf den Anschluss der jeweils seitlich neben dem Fahrzeug vorgesehenen Schneideinheiten. Diese können für Transportfahrten gemeinsam in eine Transportstellung hochgeklappt werden oder im Arbeitseinsatz unabhängig voneinander, wenn zum Beispiel eine Schneideinheit einem Hindernis, wie einem Baum, ausweichen muss. Im hochgeklappten Zustand nehmen die Schneideinheiten dann eine Position ein, in der die Sicht der Bedienungsperson zur Seite nicht oder nicht wesentlich beeinträchtigt ist. Im einzelnen ist jede seitliche Schneideinheit an einem Auslegerarm angeschlossen, der fahrzeugseitig um eine in Fahrtrichtung verlaufende horizontale Welle verschwenkbar ist. Damit im hochgeklappten Zustand ein ausreichend großer Bodenabstand entsteht, der bei einem Überfahren von Bordsteinen usw. erforderlich ist, die horizontale Welle relativ hoch am Fahrzeug vorgesehen, was bei einem Auftreffen einer Schneideinheit oder des Fahrzeuges auf Bodenunebenheiten zu einer Beeiträchtigung der Schnittqualität führt. Hinzu kommt, dass bei dieser bekannten Vorrichtung ein doppelseitig beaufschlagbarer Zylinder, der zum Hochklappen der jeweiligen Schneideinheit an dem Auslegerarm angreift, eine Schwimmstellung einnehmen muss, damit ein Verschwenken des Auslegerarms um seine fahrzeugseitige Anschlussstelle bei einem Auftreffen auf Bodenunebenheiten in der Arbeitsstellung überhaupt möglich ist. Damit die Sicht der Bedienungsperson in der Transportstellung nicht übermäßig behindert wird, ist der Auslegerarm noch mit einem Gelenk und einer integrierten Nockensteuerung versehen, wodurch bewirkt wird, dass sich jede Schneideinheit beim Hochklappen in die Transportstellung um etwa 90° nach rückwärts dreht. Die Kombination Gelenk und Nockensteuerung ist natürlich aufwendig und bedingt weitere Maßnahmen, um die Schneideinheit in der Arbeitstellung sicher zu führen.

Die mit der Erfindung zu lösende Aufgabe wird nach einem ersten Aspekt darin gesehen, die Vorrichtung zum Anschließen eines Gerätes an ein Fahrzeug dahin gehend zu verbessern, dass in der Arbeitsstellung des Gerätes auch dann ein befriedigendes Arbeitsergebnis erzielt wird, wenn Gerärt und / oder Fahrzeug auf Bodenunebenheiten stoßen, wobei jedoch in der Transportstellung ein ausreichend großer Bodenabstand gewährleistet ist. Hierzu sieht Erfindung vor, dass der Auslegerarm mit einem ersten Teil verbunden ist, dass ein zweiter Teil über einen ersten Schwenkmechanismus an dem ersten Teil angelenkt ist und dass der zweite Teil über einen zweiten und höher als der erste Schwenkmechanismus angeordneten Schwenkmechanismus an das Fahrzeug angelenkt ist, wobei der erste Teil zusammen mit dem Auslegerarm bei unbetätigter Hubvorrichtung und in der Arbeitsstellung des Gerätes um den ersten Schwenkmechanismus auf- und abbewegbar ist und bei betätigter Hubvorrichtung zum Verstellen des Gerätes aus der Arbeitsstellung in die Transportstellung um den ersten Schwenkmechanismus gegen den zweiten Teil schwenkbar ist und nachfolgend zusammen mit dem zweiten Teil um den zweiten Schwenkmechanismus hochklappbar ist. Auf diese Weise kann der erste Schwenkmechanismus relativ niedrig angeordnet werden, weil er nach der Erfindung bei einem Hochklappen in die Transportstellung mithochgeschwenkt wird. Die Bewegungsabläufe sind dabei relativ einfach. In der Arbeitsstellung kann das Gerät bei einem Auftreffen auf Bodenunebenheiten Auf- und Abbewegungen ausführen. Die Hubvorrichtung bleibt davon unbeeinflusst. Wird dagegen die Hubeinrichtung betätigt, so kippt zunächst das Gerät um den ersten Schwenkmechanismus bzw. um die entsprechende Schwenkachse bis die Kippbewegung durch Anlage an den zweiten Teil gestoppt wird. Danach wird das Gerät mit seinem Arm, dem ersten Teil, dem ersten Schwenkmechanismus und dem zweiten Teil um den zweiten Schwenkmechanismus bzw. um dessen entsprechende Schwenkachse, die relativ hoch liegt, verschwenkt.

Damit in der Transportstellung die Sicht einer Bedienungsperson nicht beeinträchtigt ist, sieht die Erfindung nach einem weiteren Aspekt vor, dass zwischen dem Fahrzeug und dem zweiten Schwenkmechanismus ein dritter Schwenkmechanismus vorgesehen ist, der rechtwinklig zu dem zweiten Schwenkmechanismus verläuft, wobei der zweite Teil über ein Verbindungsglied an das Fahrzeug angeschlossen ist. Auf diese Weise erfolgt während des Hochschwenkens noch ein zwangsgesteuertes Drehen des Gerätes.

Die erfindungsgemäße Vorrichtung lässt sich besonders gut einsetzen, wenn das Gerät als eine seitlich an ein Fahrzeug anschließbare Schneideinheit ausgebildet ist, wobei der erste Schwenkmechanismus sich in Fahrtrichtung erstreckt, auf einer Höhe angeordnet ist, die der Schnittebene der Schneideinheit entspricht und parallel oder etwa parallel zum zweiten Schwenkmechanismus verläuft.

Eine einfache Stabilisierung der ersten Schwenkachse wird dadurch erreicht, dass das Fahrzeug mit einem quer zur Fahrtrichtung verlaufenden und seitlich vom Fahrzeug abstehenden Ausleger versehen ist, gegen den der zweite Teil in der Arbeitsstellung des Gerätes anliegt. Dieser Ausleger ist Bestandteil des dritten Schwenkmechanismus, da der Ausleger Wellenform hat und endseitig eine Hülse aufweist, die eine zum zweiten Schwenkmechanismus gehörige Welle aufnimmt.

Was die Hubvorrichtung anbelangt, so kann nach einem weiteren Vorschlag der Erfindung die Hubvorrichtung mit einem Hebelteil versehen sein, der auf der Welle des zweiten Schwenkmechanismus gelagert ist, an seinem unteren Ende mit einem Hydraulikzylinder und an seinem oberen Ende über ein Verbindungsstück an dem ersten Teil bzw. an dem Auslegerarm angeschlossen ist, wobei das Verbindungsstück ein Langloch aufweist, in das ein Zugbolzen am ersten Teil oder am Auslegerarm eingreift. Auf diese Wege greift die Hubvorrichtung nicht unmittelbar am Gerät an, und die Hydraulikanlage braucht auch nicht derart ausgebildet zu werden, dass der Hydraulikzylinder eine Schwimmstellung einnehmen kann, wenn bei einem Überfahren von Bodenunebenheiten das Gerät Nickbewegungen ausführen soll. Diese werden durch das Langloch ermöglicht.

Schließlich kann nach der Erfindung noch vorgesehen werden, dass das Gerät in seiner nach oben und nach rückwärts geklappten Transportstellung wahlweise verriegelbar ist. Damit ist es möglich, das Gerät schnell hochzuklappen und wieder abzulassen, ohne dass eine Verriegelung stattfindet, beispielsweise in den Fällen, in denen einem Hindernis ausgewichen werden soll.

In der Zeichnung ist ein nachfolgend näher erläutertes Ausführungsbeispiel der Erfindung dargestellt. Es zeigt:
- Fig. 1: einen Großflächen-Sichelmäher in der Draufsicht,
- Fig. 2: die Anschlussvorrichtung des Seitenmähwerks in einer Ansicht von rückwärts bei sich in seiner Arbeitsstellung befindlichem Mähwerk,
- Fig.3: die Anschlussvorrichtung nach Fig. 2 in einer Ansicht von rückwärts und in einer Stellung, in der das Seitenmähwerk um seinen ersten Schwenkmechanismus verstellt wurde und in der die Verschwenkung um den zweiten Schwenkmechanismus erfolgt, wobei Teile einer Verriegelungseinrichtung zu erkennen sind,
- Fig. 4: die Anschlussvorrichtung nach Fig. 2 in einer Ansicht von oben,
- Fig. 5: die Anschlussvorrichtung in Seitenansicht bei sich in seiner Arbeitsstellung befindlichem rechten Seitenmähwerk,
- Fig. 6: die Anschlussvorrichtung in Seitenansicht bei sich in der Transportstellung befindlichem Seitenmähwerk,
- Fig. 7: den zweiten Teil der Anschlussvorrichtung in einer Ansicht von rückwärts,
- Fig. 8: den zweiten Teil der Anschlussvorrichtung in Seitenansicht,
- Fig. 9: den ersten Teil der Anschlussvorrichtung mit dem ersten Schwenkmechanismus in Seitenansicht,
- Fig. 10: den zweiten Schwenkmechanismus der Anschlussvorrichtung mit einem aufgesetzten Hebelteil in Seitenansicht,
- Fig. 11: den dritten Teil der Anschlussvorrichtung mit dem zweiten und dem dritten Schwenkmechanismus,
- Fig. 12: die Anschlussvorrichtung in Arbeitsstellung und in schematischer Darstelllung,
- Fig. 13: die Anschlussvorrichtung in schematischer Darstellung in einem Zustand, in dem noch keine Verschwenkung um den zweiten Schwenkmechanismus erfolgte und
- Fig. 14: die Anschlussvorrichtung in schematischer Darstellung in einem Zustand, in dem ein Verschwenken um den zweiten und dritten Schwenkmechanismus stattfindet.

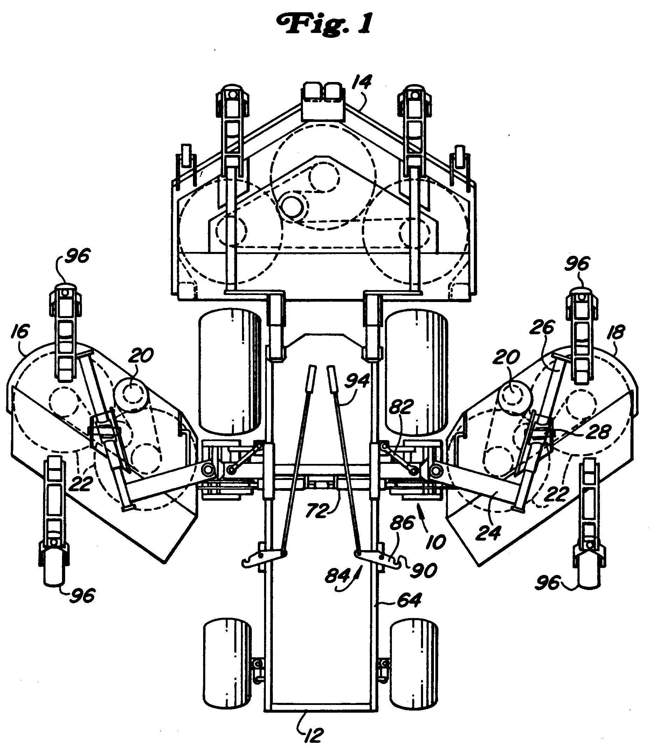

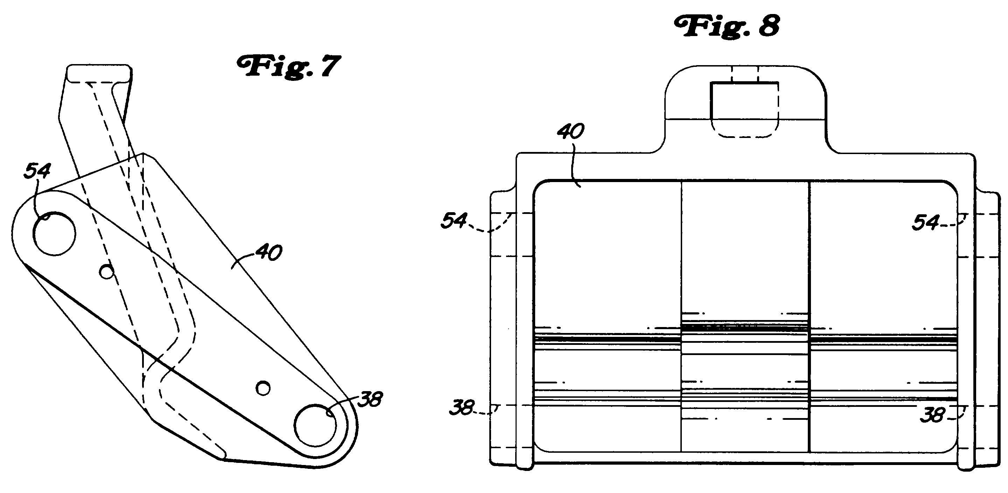

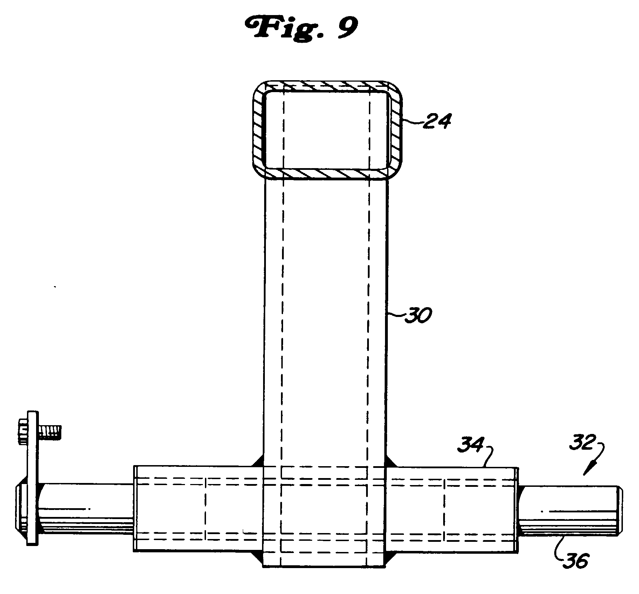

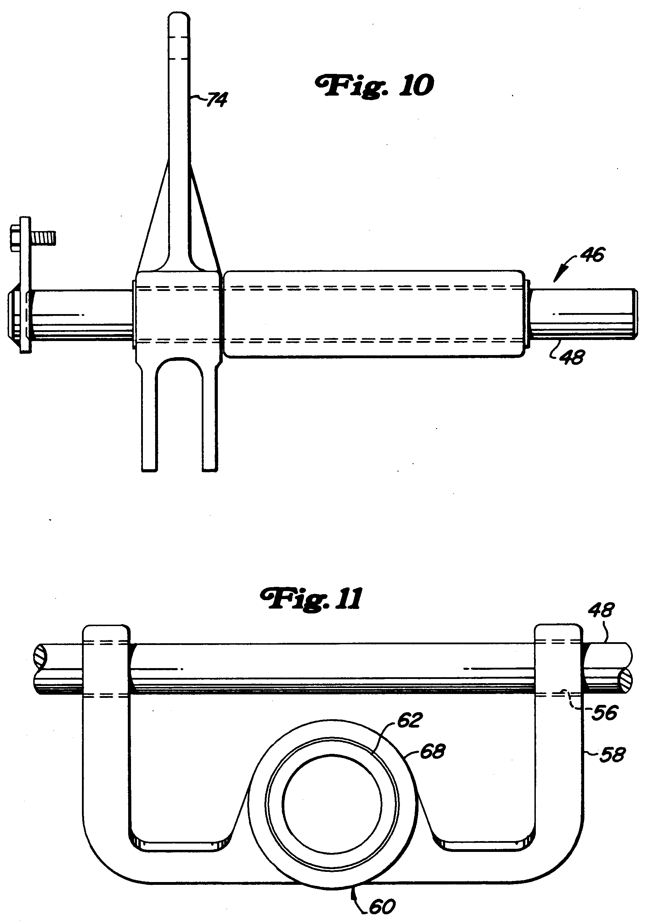

Die Fig. 1 bis 14 beziehen sich auf die Anschlussvorrichtungen bzw. auf die Aufhängung 10 für die seitlichen Schneideinheiten eines Großflächen-Sichelmähers. Im einzelnen ist aus Fig. 1 ein selbstfahrendes Gerät 12 erkennbar, das mit einer vorderen Schneideinheit 14 und einer linken und rechten flügelartig angeordneten Schneideinheit 16 und 18 ausgestattet ist. Hydraulikmotore 20 auf den Schneideinheiten dienen zum Antrieb der um vertikale Achsen umlaufenden Sichelmesser 22. Jede Schneideinheit hat mehrere Sichelmesser, so sind bei dem bevorzugten Ausführungsbeispiel an der vorderen Schneideinheit drei und an den beiden seitlichen Schneideinheiten jeweils zwei Sichelmesser erkennbar. Auf diese Weise kann bei Vorwärtsfahrt des für den kommerziellen Einsatz konzipierten Rasenmähers mit einer relativ großen Schnittbreite gemäht werden.

Die nachfolgenden Ausführungen befassen sich ausführlich mit der Aufhängung 10 für die rechte Schneideinheit 18 mit dem Verstehen, dass die Aufhängung für die linke Schneideinheit 16 ähnlich, wenn nicht identisch ist. Man erkennt einen an die Schneideinheit 18 angelenkten Armausleger oder Drücketeil 24, der über einen Anschlussmechanismus 26 an die Schneideinheit angeschlossen ist und diese auf dem Boden derart führt, dass die Schneideinheit einmal um eine in Fahrtrichtung oder im wesentlichen in Fahrtrichtung verlaufende Achse nach rechts und nach links und zum anderen um eine quer zur Fahrtrichtung verlaufende und durch einen Anschlusszapfen 28 gebildete Achse nach vorne und nach hinten kippen kann. Außerdem Bat der Anschlussmechanismuss 26 noch so gestaltet, dass bei einem Auftreffen der Schneideinheit auf Hindernisse eine rückwärtige Ausweichbewegung zur Vermeidung von Beschädigungen möglich ist. Einzelheiten des Anschlussmechanismus sind der europäischen Patentanmeldung der Anmelderin vom gleichen Tage, die die Priorität aus der US Anmeldung mit dem Aktenzeichen 648 237 vom 13. Mai 1966 in Anspruch nimmt, zu entnehmen. Auf diese Anmeldung wird ausdrücklich verwiesen.

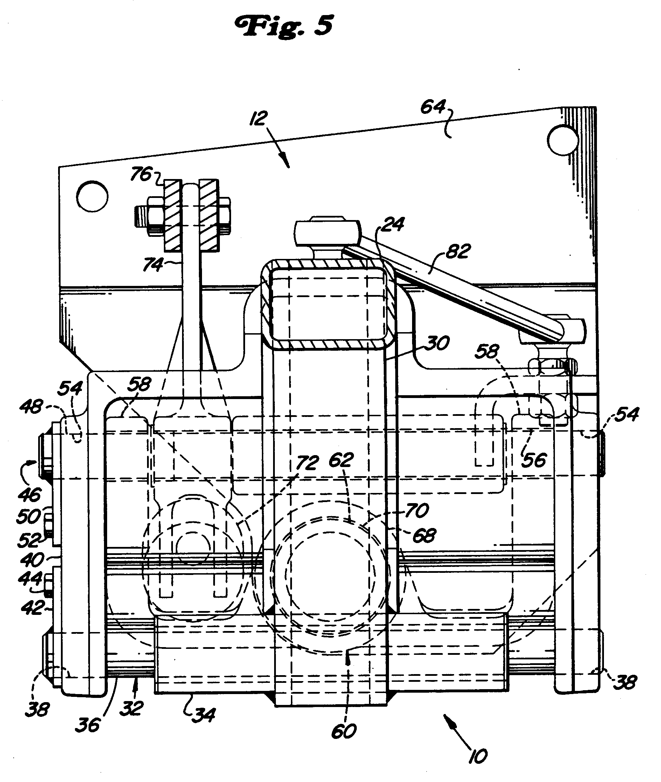

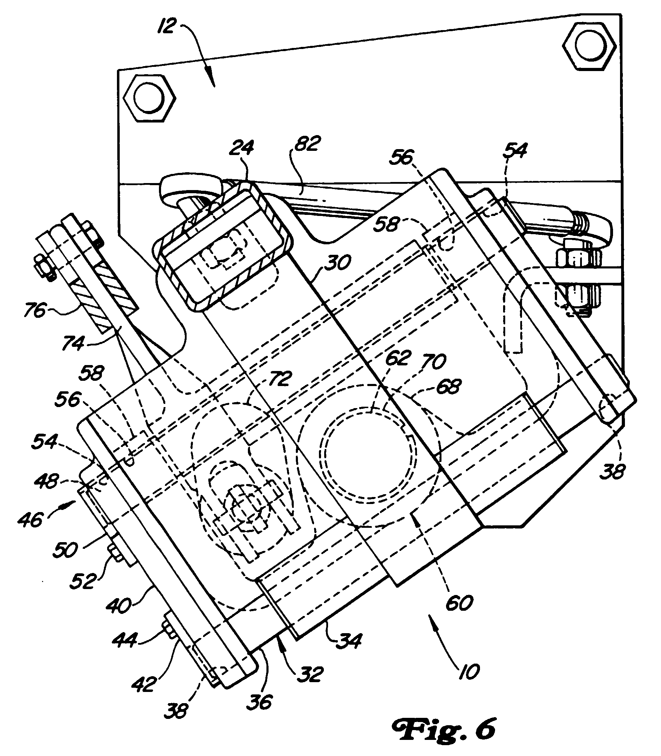

Der Drücketeil 24 ist über die Aufhängung 10 an das Gerät 12 angeschlossen. Im einzelnen ist das innere Ende des Drücketeils 24 mit einem vertikal nach unten zeigenden ersten Teil 30 fest verbunden, der an seinem unteren Ende an einem Schwenkmechanismus 32, von dem er auch getragen wird, angelenkt ist, wozu er dort mit einer Hülse 34 versehen ist, die von einer ersten Welle 36 drehbar aufgenommen ist. Die erste Welle 36 wiederum ist in Öffnungen 38 aufgenommen, die in einem zweiten Teil 40 vorgesehen sind. Eine drehfeste Verbindung wird dabei dadurch erzielt, dass eine Platte 42 an das eine Ende der ersten Welle 36 angeschweißt ist, die über eine Schraube 44 mit dem zweiten Teil 40 verbunden wird. Der zweite Teil 40 seinerseits ist an einem zweiten Schwenkmechanismus 46, von dem er auch getragen wird, angelenkt. Zu dem zweiten Schwenkmechanismus gehört eine zweite Welle 48, an die endseitig eine Platte 50 angeschweißt ist, die über eine Schraube 52 mit dem zweiten Teil 40 verbunden ist. Aus den Fig. 5 und 6 ist erkennbar, dass die zweite Welle 48 von Öffnungen 54 im zweiten Teil 40 aufgenommen ist und in Öffnungen 56 eines dritten Teils 58 drehbar ist. Der dritte Teil seinerseits ist an einem dritten Schwenkmechanismus 60, von dem er auch getragen wird, angelenkt. Zu dem dritten Schwenkmechanismus 60 gehört eine dritte Welle 62, die sich von dem Fahrzeugrahmen 64 seitlich nach außen erstreckt. Die dritte Welle ist feststehend und mit zwei Lagern 66 versehen, die ein Rohr 68 drehbar lagern. Das Rohr 68 ist mit dem dritten Teil 58 fest verbunden bzw. Bestandteil desselben, so dass der dritte Teil um die Achse der dritten Welle 62 schwenken kann. Über einen Sprengring 70 am Ende der dritten Welle 62 wird das Rohr 68 auf der dritten Welle 62 gesichert.

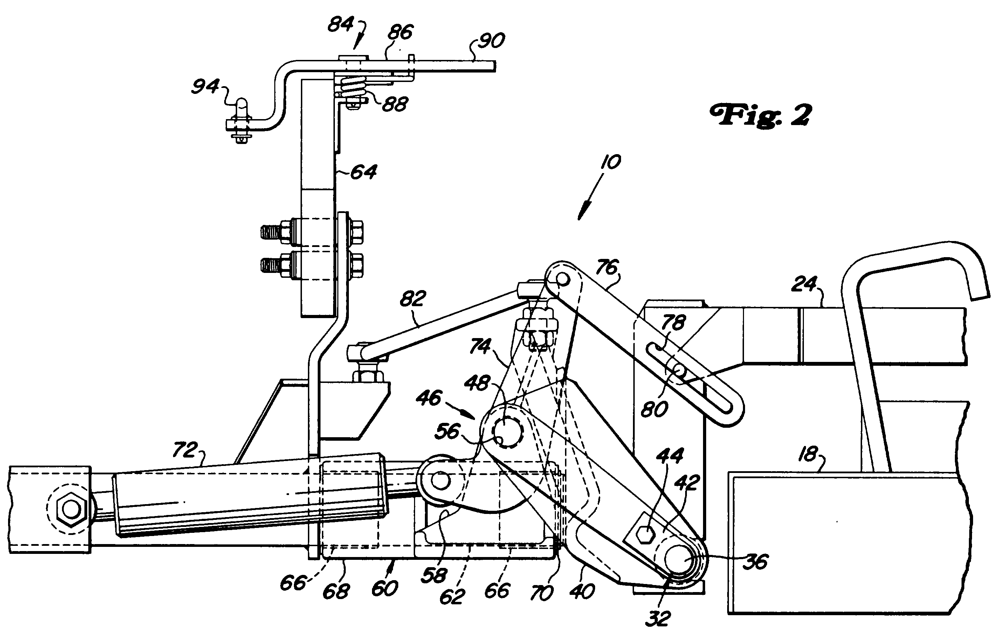

Wie bei derartigen Geräten üblich, kann die Schneideinheit aus ihrer Arbeitsstellung in eine Transportstellung hochgeklappt werden. Hierzu ist eine Hubvorrichtung vorgesehen, zu der ein hydraulisch beaufschlagbarer Zylinder 72 gehört. Dieser Zylinder ist mit seinem einen Ende an dem Fahrzeugrahmen 64 und mit seinem anderen Ende an einem Hebeteil 74 angeschlossen, der zwischen seinen Enden auf der zweiten Welle 48 drehbar gelagert ist. Aus Fig. 2 ist erkennbar, dass der Hebeteil L-förmig oder etwa L-förmig ausgebildet ist, wobei an seinem oberen Ende ein Verbindungsstück 76 gelenkig angreift. Das Verbindungsstück 76 ist noch mit einem Langloch 78 versehen, in das ein Zugbolzen 80 eingreift, der mit dem Drücketeil 24 fest verbunden ist. Zu der Hubvorrichtung gehört noch ein Gestängeteil 82, der einenends an dem Fahrzeugrahmen 64 und anderenends an dem zweiten Teil 40 angreift, damit die Schneideinheit in ihrem hochgeklappten Zustand noch nach rückwärts geschwenkt werden kann. Dies wird später noch näher erläutert.

Die Schneideinheiten können in ihrer Transportstellung auch verriegelt werden. Die hierzu vorgesehene Verriegelungsvorrichtung 84 weist, wie aus den Fig. 1 bis 4 leicht erkennbar ist, einen an dem Fahrzeugrahmen schwenkbar angeschlossenen Riegel 86 auf, der über eine Torsionsfeder 88 in seine außen liegende Riegelstellung gedrückt wird, in der ein Hakenteil 90 des Riegels in der Transportstellung der Schneideinheit einen Ausleger 92 erfassen kann, der an dem Drücketeil 24 vorgesehen ist. Eine sich bis zu dem Fahrerstand erstreckende Kontrollstange 94 kann in der Verriegelungsstellung, in der der Ausleger mit dem Riegel verriegelt ist, festgestellt werden. Die Kontrollstange lässt sich außerdem noch in einer zweiten Stellung feststellen, in der der Riegel eine Stellung einnimmt, in der er bei hochgeklappter Schneideinheit nicht mit dem Ausleger verriegelt werden kann. Dies ermöglicht der Bedienungsperson die Schneideinheit schnell anzuheben und wieder abzusenken, beispielsweise in solchen Fällen, wenn einem Hindernis ausgewichen werden soll.

In einem normalen Arbeitseinsatz werden die Schneideinheiten eines derartigen Großflächensichelmähers beim Mähen über eine Vielzahl von Pendelrädern 96 auf dem Boden geführt. Bei einer Vorwärtsfahrt des Gerätes 12 schiebt der an das Gerät 12 angeschlossene Drückearm 24 die zugehörige seitliche Schneideinheit. Bei einem Auftreffen des Gerätes 12 und / oder der Schneideinheiten auf unebenes Gelände können die Schneideinheiten gegenüber dem Gerät Schwenkbewegungen ausführen, so dass der erwünschte ausgezeichnete Rasenschnitt nicht leidet. Im einzelnen kann der Drücketeil 24 um die Achse der ersten Welle 36 bei einem Überfahren von unebenem Gelände schwenken. Hierbei ist darauf hinzuweisen, dass die erste Welle 36 auf gleicher Höhe wie die Schneidmesser 22 angeordnet ist, so dass bei einem Verschwenken der Schneideinheit gegenüber dem Gerät in der Regel kein ungeschnittenes Gras stehenbleibt. Bei einem derartigen Verschwenken verstellt sich der Zugbolzen 80 in dem in dem Verbindungsstück 76 vorgesehenen Langloch 78. Das Langloch ermöglicht der Schneideinheit 18 ein Schwenkbewegung von etwa 18° nach oben und unten aus seiner horizontalen Arbeitsstellung. Bei derartigen Schwenkbewegungen verändert der zweite Teil 40 seine Stellung normalerweise nicht, da er, wie es aus der Fig. 2 ersichtlicht ist, mit seiner hierzu entsprechend ausgebildeten Rückseite gegen das Stirnende der dritten Welle 62 anliegt.

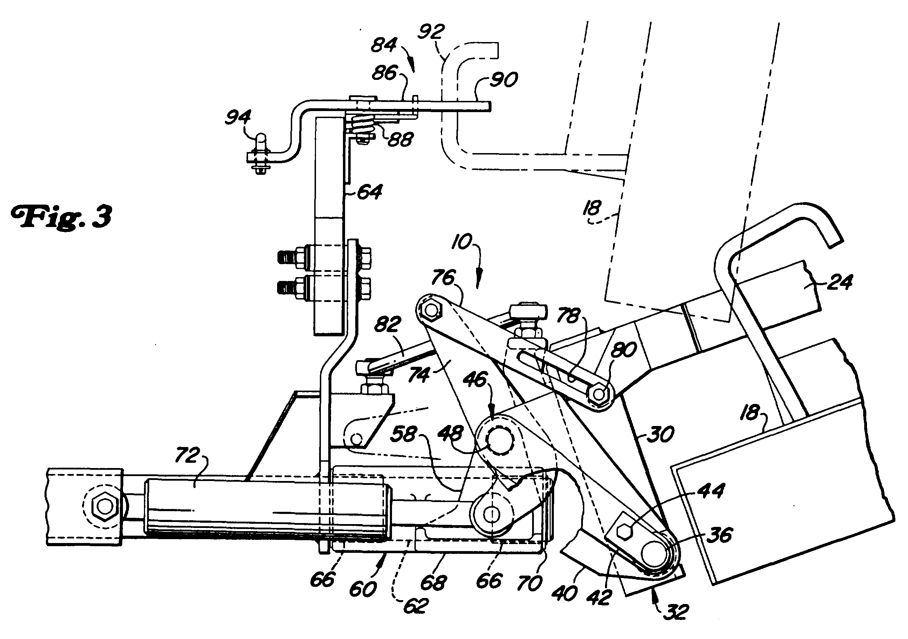

Die seitlichen Schneideinheiten lassen sich unabhängig voneinander hochklappen, was dann erwünscht ist, wenn eine Seiteneinheit einem Hindernis, beispielsweise einem Baum, ausweichen muss. Die Verstellung in die verriegelbare Transportstellung kann gemeinsam erfolgen. In jedem Falle wird zunächst der entspreche Zylinder 72 für das Hochklappen druckbeaufschlagt. Dabei wird die Kolbenstange ausgefahren, und der Hebelteil 74 verstellt sich aus seiner Stelllung in Fig. 2 entgegen dem Uhrzeigersinn um die Achse der zweiten Welle 48. Das obere Ende des Hebelteils schwenkt mit Bezug auf die Darstellung in Fig. 2 nach links, wobei gleichzeitig des Verbindungsstück 76 nach links mitgenommen wird. Sobald nun das rechte Ende des Langloches 78 gegen den Zugzapfen 80 zur Anlage kommt, wird bei einem weiteren Ausfahren der Kolbenstange des Zylinders 72 der erste Teil 30 zusammen mit dem Drücketeil 24 und der Schneideiheit um die erste Welle 36 entgegen dem Uhrzeigersinn verschwenken, und zwar solange bis der erste Teil 30 sich satt gegen die hierzu entsprechend ausgebildete Stirnseite des zweiten Teils 40 anlegt, wie es in Fig. 3 dargestellt ist. Bei einer Anlage des ersten Teils 30 gegen den zweiten Teil 40 ist eine weitere Verschwenkung entgegen dem Uhrzeigersinn um die erste Welle 36 blockiert. Hieraus resultiert, dass bei einem weiteren Ausfahren der Kolbenstange des Zylinders 72 der erste und der zweite Teil 30 und 40 zusammen mit dem Drücketeil 24 und der Schneideinheit 18 um die Achse der zweiten Welle 48 entgegen dem Uhrzeigersinn nach oben verschwenken.

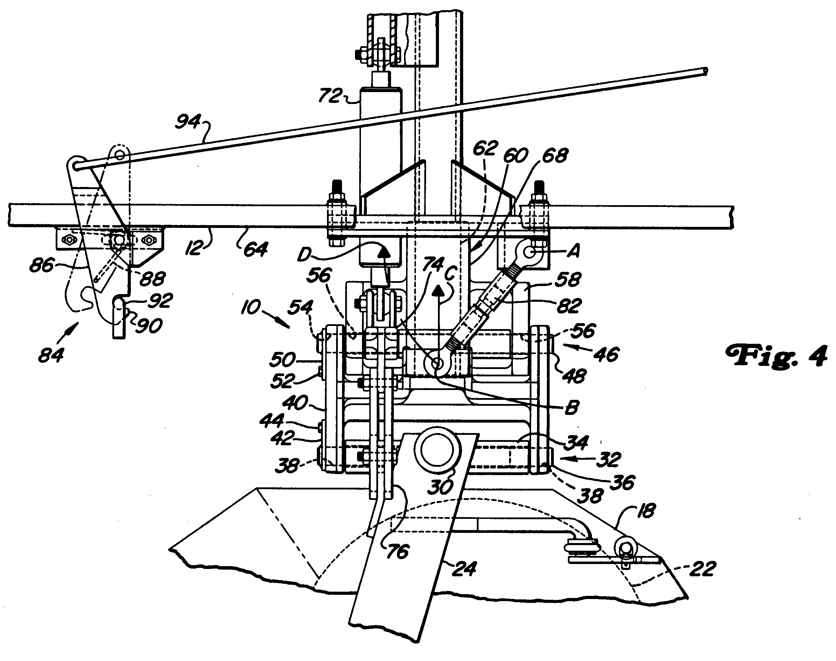

Bei einem solchen Hochklappen wirken der dritte Schwenkmechanismus 60 und der Gestängeteil 82 derart zusammen, dass nach der Anlage des ersten Teils 30 gegen den zweiten Teil 40 die Seiteneinheit 18 nach rückwärts auf der dritten Welle 62 gedreht wird. Aus Fig. 4 ist ersichtlich, dass der relativ starre Gestängeteil 82 sich zwischen dem Punkt A am Fahrzeugrahmen 64 und dem Punkt B am zweiten Teil 40 erstreckt. Dadurch verhindert der Gestängeteil 82, dass der zweite Teil 40 bei einem Hochklappen sich auf der Linie C verstellt. Vielmehr verstellt er sich auf dem Kreisbogen D nach rückwärts, da der Gestängeteil 82 den Abstand zwischen den Punkten A und B konstant hält. Durch die starre Verbindung über den Gestängeteil 82 wird der zweite Teil 40 zusammen mit dem ersten Teil 30 aus seiner Stellung in Fig. 5 entgegen dem Uhrzeigersinn in die Stellung nach Fig. 6 verstellt, wenn die Kolbenstange des Zylinders 72 ausgefahren wird. D. h. bei vollständig ausgefahrener Kolbenstange oder dann, wenn die Seiteneinheit 18 ihre Transportstellung erreicht hat, ist die entsprechende seitliche Schneideinheit nach rückwärts um die Achse der dritten Welle 62 verschwenkt.

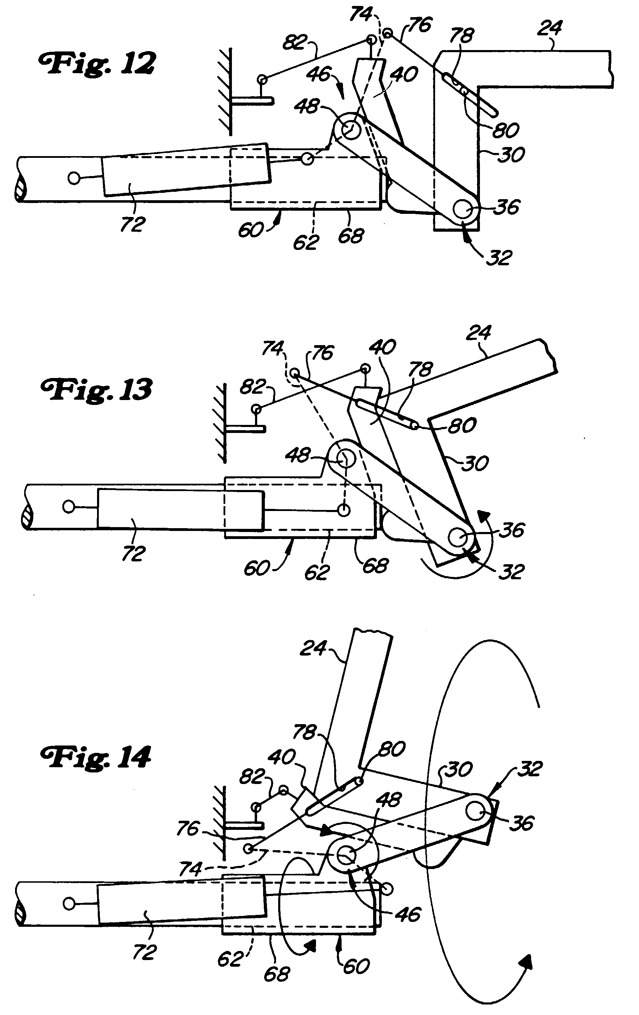

Zusammenfassend kann also gesagt werden, dass bei einem Hochklappen der Seiteneinheiten zunächst eine Drehbewegung des ersten Teils 30 um die erste Welle 36 erfolgt. Sobald der erste Teil 30 gegen den zweiten Teil 40 anliegt, erfolgt eine Verschwenkung beider Teile 30 und 40 gemeinsam um die Achse der relativ hoch liegenden zweiten Welle 48 nach oben und um die Achse der dritten Welle 62 nach rückwärts. Für diese Bewegungsvorgänge ist lediglich ein Zylinder erforderlich. Alle diese Bewegungsvorgänge sind schematisch nochmals in den Fig. 12 bis 13 angedeutet. Man erkennt auch dort die relativ hochliegende zweite Welle 48, wodurch erreicht wird, dass die Seiteneinheiten im hochgeklappter Transportstellung einen großen Bodenabstand haben.

Obwohl derartige Großflächensichelmäher eine große Arbeitsbreite aufweisen, ist ihre Bauweise wegen der erforderliche Wendigkeit eher gedrungen. Zwischen den in der Regel antreibbaren vorderen Rädern und den rückwärtigen lenkbaren Rädern müssen ein Fahrerstand für die Bedienungsperson, ein Motor und ein Getriebe untergebracht werden. Damit nun die Seiteneinheiten 16 und 18 im hochgeklappten Zustand den Aufstieg auf den Fahrerstand und / oder die Sicht zur Seite nicht behindern, sind sie in der Transportstellung zusätzlich nach rückwärts verschwenkt.

Bei einem Verstellen der seitlichen Schneideinheiten aus der Transportstellung in die Arbeitsstellung laufen die Vorgänge, die für das Hochklappen beschrieben wurden, im wesentlichen umgekehrt ab. Zum Absenken werden die entsprechenden Zylinder eingefahren, und die Schneideinheiten senken sich infolge ihres Eigengewichtes ab. Der erste und der zweite Teil 30 und 40 drehen zunächst um die Achse der dritten Welle 62 nach vorne und gleichzeitig um die Achse der zweiten Welle 48 nach unten. Sobald der zweite Teil 40 wieder gegen das Stirnende der dritten Welle zur Anlage kommt, ist die Drehbewegung um die Achse der zweiten Welle 48 beendet und die Drehung nach unten um die Achse der ersten Welle 36 kann beginnen.

## Patentansprüche

1. Vorrichtung zum Anschließen eines aus einer Arbeitsstellung in eine Transportstellung höhenverstellbaren Gerätes an ein Fahrzeug mit einem an das Gerät angeschlossenen Auslegerarm (24) und mit einer Hubvorrichtung, dadurch gekennzeichnet, dass der Auslegerarm (24) mit einem ersten Teil (30) verbunden ist, dass ein zweiter Teil (40) über einen ersten Schwenkmechanismus (32) an dem ersten Teil (30) angelenkt ist und dass der zweite Teil (40) über einen zweiten und höher als der erste Schwenkmechanismus (32) angeordneten Schwenkmechanismus (46) an das Fahrzeug angelenkt ist, wobei der erste Teil (30) zusammen mit dem Auslegerarm (24) bei unbetätigter Hubvorrichtung und in der Arbeitsstellung des Gerätes um den ersten Schwenkmechanismus (32) auf- und abbewegbar ist und bei betätigter Hubvorrichtung zum Verstellen des Gerätes aus der Arbeitsstellung in die Transportstellung um den ersten Schwenkmechanismus (32) gegen den zweiten Teil (40) schwenkbar ist und nachfolgend zusammen mit dem zweiten Teil (40) um den zweiten Schwenkmechanismus (46) hochklappbar ist.

2. Vorrichtung nach Anspruch 1, dadurch gekennzeichnet, dass zwischen dem Fahrzeug und dem zweiten Schwenkmechanismus (46) ein dritter Schwenkmechanismus (60) vorgesehen ist, der rechtwinklig zu dem zweiten Schwenkmechanismus (46) verläuft, wobei der zweite Teil (40) über ein Verbindungsglied an das Fahrzeug angeschlossen ist.

3. Vorrichtung nach Anspruch 1 oder 2, dadurch gekennzeichnet, dass das Gerät als eine seitlich an ein Fahrzeug anschließbare Schneideinheit (16, 18) ausgebildet ist, wobei der erste Schwenkmechanismus (32) sich in Fahrtrichtung erstreckt, auf einer Höhe angeordnet ist, die der Schnittebene der Schneideinheit (16, 18) entspricht und parallel oder etwa parallel zum zweiten Schwenkmechanismus (46) verläuft.

4. Vorrichtung nach einem oder mehreren der vorherigen Ansprüche, dadurch gekennzeichnet, dass das Fahrzeug mit einem quer zur Fahrtrichtung verlaufenden und seitlich vom Fahrzeug abstehenden Ausleger versehen ist, gegen den der zweite Teil (40) in der Arbeitsstellung des Gerätes anliegt.

5. Vorrichtung nach Anspruch 4, dadurch gekennzeichnet, dass der Ausleger Wellenform hat und endseitig eine Hülse (68) aufweist, die eine zum zweiten Schwenkmechanismus (46) gehörige Welle (48) aufnimmt.

6. Vorrichtung nach einem oder mehreren der vorherigen Ansprüche, dadurch gekennzeichnet, dass die Hubvorrichtung mit einem Hebelteil (74) versehen ist, der auf der Welle (48) des zweiten Schwenkmechanismus (46) gelagert ist, an seinem unteren Ende mit einem Hydraulikzylinder (72) und an seinem oberen Ende über ein Verbindungsstück (76) an dem ersten Teil (30) bzw. an dem Auslegerarm (24) angeschlossen ist.

7. Vorrichtung nach Anspruch 6, dadurch gekennzeichnet, dass das Verbindungsstück (76) ein Langloch (78) aufweist, in das ein Zugbolzen (80) am ersten Teil (30) oder am Auslegerarm (24) eingreift.

8. Vorrichtung nach einem oder mehreren der vorherigen Ansprüche, dadurch gekennzeichnet, dass das Gerät in seiner nach oben und nach rückwärts geklappten Transportstellung wahlweise verriegelbar ist.
